# EUROPEAN PATENT SPECIFICATION

(11) **EP 3 780 489 B1**
(45) Date of publication and mention of the grant of the patent: **22.04.2026**
(21) Application number: 20181298.9
(22) Date of filing: 22.06.2020
(51) Int. Cl.: H04L 9/32, H04L 9/08

(54) **MEMORY DEVICE PROVIDING DATA SECURITY**
SPEICHERVORRICHTUNG ZUR BEREITSTELLUNG VON DATENSICHERHEIT
DISPOSITIF DE MÉMOIRE ASSURANT LA SÉCURITÉ DES DONNÉES

(30) Priority: 16.08.2019 US 201962887679 P; 09.06.2020 US 202016896244
(43) Date of publication of application: 17.02.2021
(73) Proprietor: PUFsecurity Corporation, Hsinchu County 302 (TW)
(72) Inventor: Yang, Ching-Sung, Hsinchu County 302 (TW); Wu, Meng-Yi, Hsinchu County 302 (TW); Wu, Chia-Cho, Hsinchu County 302 (TW)
(74) Representative: Straus, Alexander

(56) References cited:
- US-A1- 2016 105 282
- US-A1- 2018 123 808
- US-A1- 2019 079 878
- SCOTT JONES: "How Unclonable, Turnkey Embedded Security Protects Designs from the Ground Up", 1 November 2017 (2017-11-01), XP055753742, Retrieved from the Internet <URL:https://www.maximintegrated.com/content/dam/files/design/technical-documents/white-papers/how-unclonable-turnkey-embedded-security-protects-designs-from-the-ground-up.pdf>

## Description

### Field of the Invention

The invention relates to memory devices, and in particular, to a memory device providing data security.

### Background of the Invention

Information security has become a great concern of electronic circuits as information technology and communication technology advance. Information security involves preventing unauthorized data access, use, modification, inspection and recording. It is important to maintain information security for memory devices.

### Summary of the Invention

The present disclosure aims at providing a memory device providing data security. This is achieved by a memory device according to claim 1. The dependent claims pertain to corresponding further developments and improvements.

As will be seen more clearly from the detailed description following below, the claimed memory device includes a physically unclonable function (PUF) unit, a controller and a memory array. The PUF unit is used to provide a random bit pool. The controller is coupled to the PUF unit and is used to extract a random bit sequence from the random bit pool. The controller includes a masking engine. The masking engine is used to perform a key derivation function to stretch the extracted random bit sequence and to mask an input signal. The memory array is coupled to the masking engine and is used to store according to the masked input signal.

### Brief Description of the Drawings

In the following, the invention is further illustrated by way of example, taking reference to the accompanying drawings. Thereof
FIG. 1 is a block diagram of a cryptographic system according to an embodiment of the invention;
FIG. 2 is a block diagram of a cryptographic system according to another embodiment of the invention; and
FIG. 3 is a block diagram of a cryptographic system according to another embodiment of the invention.

### Detailed Description

As used herein, the term "true random" refer to a bit stream or a data sequence that is substantially 50% in a hamming weight and an inter-device (ID) hamming distance, and is substantially 1 in a minimum entropy (min-entropy).

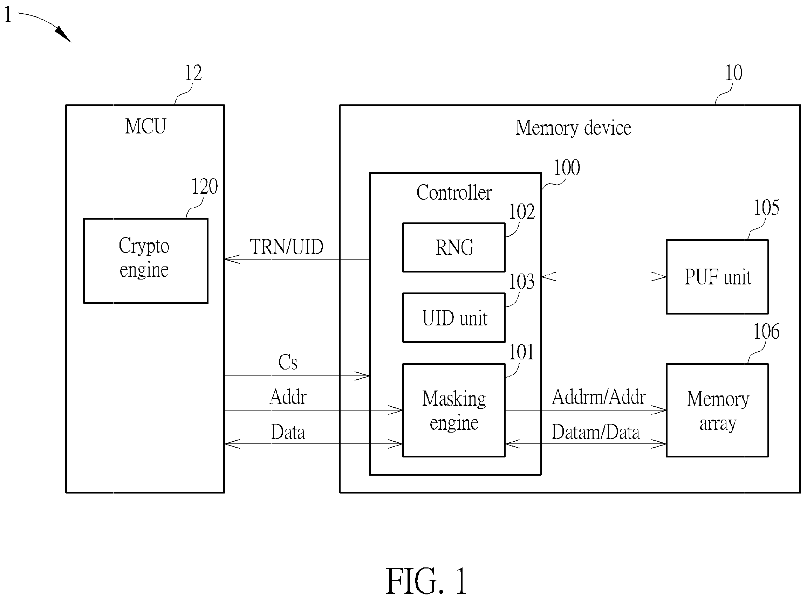

FIG. 1 is a block diagram of a cryptographic system 1 according to an embodiment of the invention. The cryptographic system 1 may include a memory device 10 and a microprocessor (MCU) 12 coupled thereto. The cryptographic system 1 may be applicable in an internet of things (IoT) network. The MCU 12 may acquire data from an external device or access data from the memory device 10. The external device may be a sensor or a network. The memory device 10 may provide security functions including secure data storage, unique identity generation, true random number generation and secure key storage, thereby saving data processing resources of the MCU 12, protecting data from unauthorized access and enhancing data security.

The MCU 12 may include a crypto engine 120. The crypto engine 120 may be implemented by software code executable by the MCU 12. The memory device 10 may include a controller 100, a physically unclonable function (PUF) unit 105 and a memory array 106. The controller 100 may be coupled to the MCU 12, the PUF unit 105 and the memory array 106. The controller 100 may include a masking engine 101, a random number generator (RNG) 102 and a unique identifier (UID) unit 103. The masking engine 101, the random number generator 102 and the UID unit 103 may be coupled to the PUF unit 105. The masking engine 101 may be coupled to the memory array 106. The PUF unit 105, the memory array 106 and the controller 100 may form an integrated circuit.

The crypto engine 120 may perform an authentication process to provide assurance of the authenticity of data access, and hence, to control data access to the memory device 10. Upon verifying an authorized access, the crypto engine 120 may send a security command Cs to the memory device 10 to grant data access to the memory array 106. The memory device 10 may receive the security command Cs, and control the data access to the memory array 106 according to the security command Cs. The memory array 106 may be a NAND flash memory. The data access may be read access and/or write access.

The PUF unit 105 may store a random bit pool and generate a PUF response from the random bit pool in response to a PUF challenge. The OTP memory may be antifuse-based and the random bit pool may be programmed into the OTP memory during manufacturing setup. The random bit pool may include a plurality of PUF bits that are truly random. The PUF unit 105 may output the PUF response according to a predetermined selecting algorithm. In some embodiments, the PUF unit 105 may select the first 1K PUF bits as the PUF response. In other embodiments, the PUF unit 105 may select PUF bits from rows of memory cells in a predetermined row order, e.g. selecting PUF bits from odd rows in an ascending order, to serve as the PUF response. The PUF unit 105 may include a one-time programmable (OTP) memory. In some embodiments, the one-time programmable memory may be replaced with a non-volatile memory containing a plurality of true random bits. For example, the non-volatile memory may be 64-bit-by-64-bit flash memory cells, and each row, column or diagonal line of the memory cells may contain true random bits. In some embodiments, the plurality of true random bits may be updated regularly.

The controller 100 may operate the PUF unit 105 and the masking engine 101 to provide secure data storage. Upon receiving the security command Cs of granting data access, the controller 100 may extract a random bit sequence from the random bit pool in the PUF unit 105, the masking engine 101 may perform a key derivation function to stretch the extracted random bit sequence and to mask an input signal with the stretched random bit sequence, and the memory array 106 may store according to the masked input signal. The input signal may include an access address Addr or a data sequence Data. The masking of the input signal with the stretched random bit sequence may be data masking or address masking, and may involve performing an XOR operation on the stretched random bit sequence and the data sequence Data or the access address Addr in a bitwise manner. In data masking, the masking engine 101 may mask the access address Addr with the stretched random bit sequence to generate a derived key, and mask the data sequence Data with the derived key to generate a masked data sequence Datam, and the memory array 106 may store the masked data sequence Datam at the access address Addr. In some embodiments, the masking engine 101 may store the derived key in a local memory for recovering the masked data sequence Datam in a read operation. For example, in a read operation, the masking engine 101 may read the masked data sequence Datam at the access address Addr, mask the masked data sequence Datam with the derived key to recover the data sequence Data, and transmit the data sequence Data to the MCU 12. In address masking, the masking engine 101 may mask the data sequence Data with the stretched random bit sequence to generate a derived key, and mask the access address Addr with the derived key to generate a masked access address Addrm, and the memory array 106 may store the data sequence Data at the masked access address Addrm. In some embodiments, the masking engine 101 may store the derived key in the local memory for reproducing the masked access address Addrm in a read operation. For example, in a read operation, the masking engine 101 may receive the access address Addr from MCU 12, reproduce the masked access address Addrm by masking the access address Addr and the derived key, read the data sequence Data at the masked access address Addrm, and transmit the data sequence Data to the MCU 12. The data masking operation and the address masking operation enhance data security and protect data from unauthorized access.

The random number generator 102 may generate a true random number. In some embodiments, the crypto engine 120 may send a security command Cs including a request for a true random number to the controller 100, the controller 100 may extract a random bit sequence from the random bit pool in the PUF unit 105 in response to the request, and the random number generator 102 may generate a true random number TRN with the extracted random bit sequence, and transmit the true random number TRN to the crypto engine 120.

The UID unit 103 may generate a unique identifier. In some embodiments, the crypto engine 120 may send a security command Cs including a request for an unique identifier to the controller 100, the controller 100 may extract a random bit sequence from the random bit pool in the PUF unit 105 in response to the request, and the UID unit 103 may generate an unique identifier UID according to the extracted random bit sequence, and transmit the unique identifier UID to the crypto engine 120.

The PUF unit 105 may provide secure key storage. Specifically, a portion of the OTP memory in the PUF unit 105 may be reserved for storing secure keys. In some embodiments, the crypto engine 120 may send a security command Cs including a request for storing a secure key along with the secure key to the controller 100, and the PUF unit 105 may store secure key in the reserved portion of the OTP memory.

Since the masking engine 101 may perform data masking and/or address masking on the data sequences and/or access addresses, the memory device 10 may be used in an execute in place (XIP) method, in which programs are executed directly from the memory array 106 rather than copying the same into a volatile memory, thereby reducing the total amount of memory required.

The cryptographic system 1 employs the memory device 10 to provide security functions including secure data storage, unique identity generation, true random number generation and secure key storage, saving data processing resources of the MCU 12, enabling XIP operations while protecting data from unauthorized access and enhancing data security.

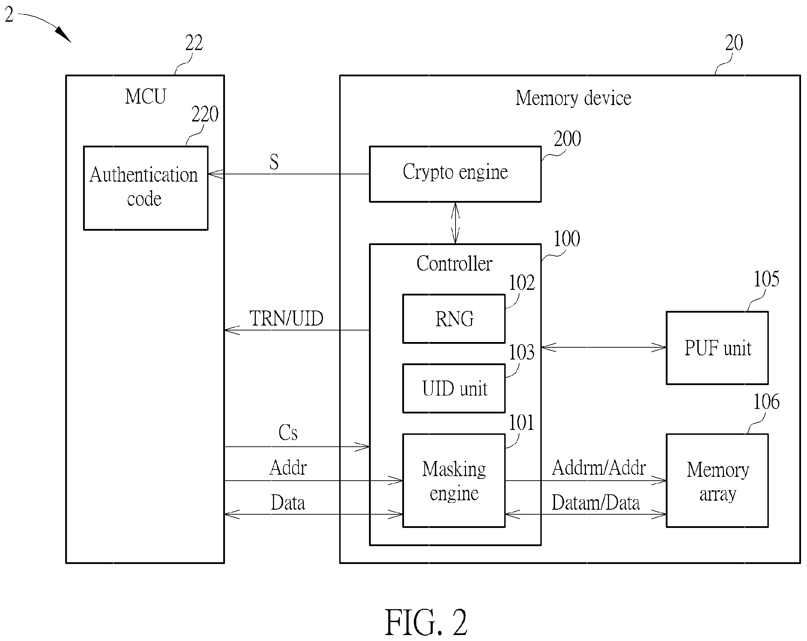

FIG. 2 is a block diagram of a cryptographic system 2 according to another embodiment of the invention. The cryptographic system 2 is different from the cryptographic system 1 in that an MCU 22 may include a non-volatile memory for storing authentication code 220, and a memory device 20 may further include a crypto engine 200. The crypto engine 200 may be implemented by a hardware circuit capable of loading the authentication code 220 from the MCU 12 upon power-up and executing the same. The following discussion will focus on the configurations and the operations of the authentication code 220 and the crypto engine 200. The crypto engine 200 may be coupled to the controller 100.

The crypto engine 200 may execute the authentication code 220 to perform an authentication process. The authentication process may include a sequence of authentication operations. The authentication code 220 may be firmware code for instructing the crypto engine 200 to perform the sequence of authentication operations. In some embodiments, the controller 100 may receive a sequence of security commands Cs from the MCU 22, the sequence of security commands Cs being used to execute the sequence of authentication operations. The controller 100 may instruct the crypto engine 200 to perform the sequence of authentication operations in response to the sequence of security commands Cs, and control the data access to the memory array 106 according to a result of the sequence of authentication operations. The controller 100 may grant the data access to the memory array 106 upon a successful authentication process, and may deny the data access to the memory array 106 upon a failed authentication process.

The crypto engine 200 may generate an entropy S by using the extracted random bit sequence and/or the true random number TRN. The MCU 22 may send a security command Cs including a request for an entropy to the controller 100. In one embodiment, in response to the request, the controller 100 may extract a random bit sequence from the random bit pool in the PUF unit 105 and instruct the random number generator 102 to generate the true random number TRN, and the crypto engine 200 may mask the true random number TRN with the extracted random bit sequence to generate the entropy S, and transmit the entropy S to the MCU 12. The true random number TRN, the extracted random bit sequence and the entropy S may be equal in length. In another embodiment, the crypto engine 200 may generate the entropy S by combining a plurality of bit in the true random number TRN in a predetermined period, e.g., 3 clock cycles, into an entropy bit, so as to generate the entropy S, and transmit the entropy S to the MCU 12. The entropy S may be shorter in length than that of the true random number TRN. In yet another embodiment, the crypto engine 200 may generate the entropy S by combining a plurality of bit in the extracted random bit sequence in a predetermined period into an entropy bit, so as to generate the entropy S, and transmit the entropy S to the MCU 12. The entropy S may be shorter in length than that of the extracted random bit sequence.

Since the crypto engine 200 is implemented by hardware, the authentication process may be performed in a quicker and more efficient manner. Further, since the crypto engine 200 is located in the memory device 20, all authentication data for use in the authentication process may be kept inside the memory device 20 without being exposed to external circuits, enhancing the security level. The cryptographic system 2 employs the crypto engine 200 and the authentication code 220 to increase operation speed and efficiency of the authentication process, reduce the risk of the authentication key from being exposed to external circuits, protect data from unauthorized access, and save data processing resources of the MCU 22.

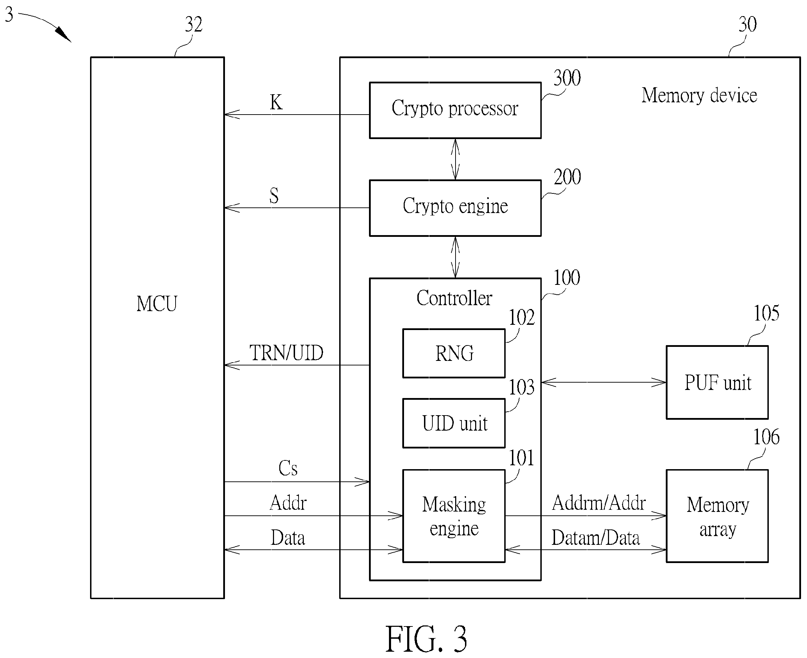

FIG. 3 is a block diagram of a cryptographic system 3 according to another embodiment of the invention. The cryptographic system 3 is different from the cryptographic system 2 in that an MCU 32 may not have the authentication code 220, and a memory device 30 may further include a crypto processor 300. The following discussion will focus on the configurations and the operations of the crypto processor 300. The crypto processor 300 may be coupled to the crypto engine 200.

The crypto processor 300 may include a circuit instructing a sequence of authentication operations, thereby further increasing operation speed and efficiency of the authentication process. The controller 100 may receive a security command Cs to initiate an authentication process. The controller 100 may instruct the crypto processor 300 to initiate the authentication process in response to the security command Cs. In turn, the crypto processor 300 may instruct the crypto engine to perform the sequence of authentication operations. Subsequently, the crypto engine 200 may perform the sequence of authentication operations to generate an authentication result. The controller 100 may control the data access to the memory array 106 according to the authentication result. In particular, the controller 100 may grant the data access to the memory array 106 upon a successful authentication process, and may deny the data access to the memory array 106 upon a failed authentication process.

The crypto processor 300 may generate a key K by using the entropy S and the extracted random bit sequence. The MCU 32 may send a security command Cs including a request for a key to the controller 100. In response to the request, the controller 100 may extract a random bit sequence from the random bit pool in the PUF unit 105 and instruct the crypto engine 20 to generate the entropy S, and the crypto engine 200 may mask the entropy S with the extracted random bit sequence to generate the key K, and transmit the key K to the MCU 12. The entropy S, the extracted random bit sequence and the key K may be equal in length.

Since the crypto processor 300 and the crypto engine 200 are both implemented by hardware, the authentication process may be performed in a quicker and more efficient manner. Since the crypto processor 300 and the crypto engine 200 are both located in the memory device 30, all authentication data for use in the authentication process may be kept inside the memory device 30 without being exposed to external circuits, enhancing the security level. The cryptographic system 3 employs the crypto processor 300 to increase operation speed and efficiency of the authentication process, reduce the risk of the authentication key from being exposed to external circuits, protect data from unauthorized access, and save data processing resources of the MCU 32.

## Claims

1. A memory device (10, 20, 30) comprising
a memory array (106);
a controller (100) coupled to a microprocessor (12, 22);
a physically unclonable (PUF) unit (105);
wherein
the physically unclonable function (PUF) unit (105) is configured to provide a random bit pool;
the controller (100) is coupled to the PUF unit (105) and is configured to, upon receiving from the microprocessor a security command to grant data access to the memory array, extract a random bit sequence from the random bit pool, and comprises:
a masking engine (101) configured to perform a key derivation function to stretch the extracted random bit sequence, in a data masking operation, perform an XOR operation on the stretched random bit sequence and the access address (Addr) in a bitwise manner to mask the access address (Addr) with the stretched random bit sequence to generate a derived key, store the derived key in a local memory, and mask the data sequence (Data) with the derived key to generate a masked data sequence (Datam); and
wherein the memory array (106) is coupled to the masking engine (101) and is configured to store the masked data sequence (Datam) at the access address;
wherein the masking engine (101) is further configured to, in a read operation, read the masked data sequence from the memory array (106) at the access address, mask the masked data sequence with the derived key from the local memory to recover the data sequence, and
transmit the data sequence to the microprocessor.

2. The memory device (10, 20, 30) of claim 1, **characterised in that** the controller (100) further comprises a unique identifier (UID) unit (103) configured to generate an unique identifier according to the extracted random bit sequence.

3. The memory device (10, 20, 30) of any of the preceding claims, **characterised in that** the controller (100) further comprises:
a random number generator (102) coupled to the PUF unit (105) and configured to generate a true random number with the extracted random bit sequence.

4. The memory device (20, 30) of claim 3, **characterised by** further comprising:
a crypto engine (200) coupled to the controller (100), and configured to generate an entropy (S) by using the extracted random bit sequence and/or the true random number.

5. The memory device (30) of claim 4, **characterised by** further comprising:
a crypto processor (300) coupled to the crypto engine (200), and configured to generate keys (K) by using the entropy (S) and the extracted random bit sequence.

6. The memory device (10, 20, 30) of any of the preceding claims, **characterised in that** the PUF unit (105), the memory array (106) and the controller (100) are formed in an integrated circuit.

7. The memory device (10, 20, 30) of any of the preceding claims, **characterised in that** the PUF unit (105) comprises a one-time programmable memory.

8. The memory device (10, 20, 30) of any of the preceding claims, **characterised in that** the controller (100) is further configured to control data access to the memory array (106) according to the security command (Cs).

9. The memory device (20) of any of the preceding claims, wherein
the microprocessor (12, 22) further comprises a crypto engine (120, 200) and wherein:
the controller (100) further comprises a random number generator (102), and is further configured to receive a security command (Cs) including a request for an entropy (S) from the microprocessor (22), extract a second extracted random bit sequence from the random bit pool in response to the request, and instruct the random number generator (102) to generate a true random number (TRN); and
the crypto engine (200) is configured to mask the true random number (TRN) with the second extracted random bit sequence to generate an entropy (S), and transmit the entropy (S) to the microprocessor (22).

10. The memory device (20) of any of claims 1 to 8, wherein the microprocessor (12, 22) further comprises a crypto engine (120, 200) and wherein:
the controller (100) further comprises a random number generator (102), and is further configured to receive a security command (Cs) including a request for an entropy (S) from the microprocessor (22), and instruct the random number generator (102) to generate a true random number (TRN) in response to the request; and
the crypto engine (200) is configured to combine a plurality of bits in the true random number (TRN) in a predetermined period to generate an entropy (S), and transmit the entropy (S) to the microprocessor (22).

11. The memory device (20) of any of claims 1 to 8, wherein the microprocessor (12, 22) further comprises a crypto engine (120, 200) and
wherein:
the controller (100) is further configured to receive a security command (Cs) including a request for an entropy (S) from the microprocessor (22), and extract a second extracted random bit sequence from the random bit pool in response to the request; and
the crypto engine (200) is configured to combine a plurality of bits in the second extracted random bit sequence in a predetermined period to generate an entropy (S), and transmit the entropy (S) to the microprocessor (22).

## Patentansprüche

1. Speichergerät (10, 20, 30), welches umfasst:
ein Speicherarray (106);
eine Steuerung (100), die mit einem Mikroprozessor (12, 22) verbunden ist;
eine physikalisch nicht klonbare Funktionseinheit (PUF) (105);
worin die physikalisch nicht klonbare Funktionseinheit (PUF) (105) konfiguriert ist, einen Zufallsbitpool bereitzustellen;
die Steuerung (100) mit der PUF-Einheit (105) gekoppelt und konfiguriert ist, nach Empfang eines Sicherheitsbefehls vom Mikroprozessor, der den Datenzugriff auf das Speicherarray gewährt, eine Zufallsbitsequenz aus dem Zufallsbitpool zu extrahieren, und umfasst:
eine Maskierungs-Engine (101), die konfiguriert ist, eine Schlüsselableitungsfunktion auszuführen, um die extrahierte zufällige Bitsequenz in einer Datenmaskierungsoperation zu strecken, eine XOR-Operation auf die gestreckte zufällige Bitsequenz und die Zugriffsadresse (Addr) bitweise auszuführen, um die Zugriffsadresse (Addr) mit der gestreckten zufälligen Bitsequenz zu maskieren, um einen abgeleiteten Schlüssel zu erzeugen, den abgeleiteten Schlüssel in einem lokalen Speicher zu speichern und die Datensequenz (Data) mit dem abgeleiteten Schlüssel zu maskieren, um eine maskierte Datensequenz (Datam) zu erzeugen; und
worin der Speicherarray (106) mit der Maskierungs-Engine (101) gekoppelt ist und konfiguriert ist, die maskierte Datensequenz (Datam) an der Zugriffsadresse zu speichern;
worin die Maskierungs-Engine (101) ferner konfiguriert ist, in einem Lesevorgang die maskierte Datensequenz aus dem Speicherarray (106) an der Zugriffsadresse zu lesen, die maskierte Datensequenz mit dem abgeleiteten Schlüssel aus dem lokalen Speicher zu maskieren, um die Datensequenz wiederherzustellen, und die Datensequenz an den Mikroprozessor zu übertragen.

2. Speichergerät (10, 20, 30) nach Anspruch 1, **dadurch gekennzeichnet, dass** die Steuerung (100) ferner eine eindeutige Identifikationsnummer- (UID) Einheit (103) umfasst, die konfiguriert ist, eine eindeutige Identifikationsnummer gemäß der extrahierten Zufallsbitfolge zu erzeugen.

3. Speichervorrichtung (10, 20, 30) nach einem der vorstehenden Ansprüche, **dadurch gekennzeichnet, dass** die Steuerung (100) ferner umfasst:
einen Zufallszahlengenerator (102), der mit der PUF-Einheit (105) gekoppelt und konfiguriert ist, mit der extrahierten Zufallsbitfolge eine echte Zufallszahl zu erzeugen.

4. Speichervorrichtung (20, 30) nach Anspruch 3, **dadurch gekennzeichnet, dass** diese ferner umfasst:
eine Krypto-Engine (200), die mit der Steuerung (100) gekoppelt und konfiguriert ist, unter Verwendung der extrahierten Zufallsbitsequenz und/oder der echten Zufallszahl eine Entropie (S) zu erzeugen.

5. Speichervorrichtung (30) nach Anspruch 4, **dadurch gekennzeichnet, dass** diese ferner umfasst:
einen Krypto-Prozessor (300), der mit der Krypto-Engine (200) gekoppelt und konfiguriert ist, Schlüssel (K) unter Verwendung der Entropie (S) und der extrahierten Zufallsbitsequenz zu erzeugen.

6. Speichervorrichtung (10, 20, 30) nach einem der vorstehenden Ansprüche, **dadurch gekennzeichnet, dass** die PUF-Einheit (105), das Speicherarray (106) und die Steuerung (100) in einer integrierten Schaltung ausgebildet sind.

7. Speichervorrichtung (10, 20, 30) nach einem der vorstehenden Ansprüche, **dadurch gekennzeichnet, dass** die PUF-Einheit (105) einen einmalig programmierbaren Speicher umfasst.

8. Speichervorrichtung (10, 20, 30) nach einem der vorstehenden Ansprüche, **dadurch gekennzeichnet, dass** die Steuerung (100) ferner konfiguriert ist, den Datenzugriff auf das Speicherarray (106) gemäß dem Sicherheitsbefehl (Cs) zu steuern.

9. Speichervorrichtung (20) nach einem der vorstehenden Ansprüche, worin der Mikroprozessor (12, 22) ferner eine Krypto-Engine (120, 200) umfasst und worin:
die Steuerung (100) ferner einen Zufallszahlengenerator (102) umfasst und ferner konfiguriert ist, einen Sicherheitsbefehl (Cs) einschließlich einer Anforderung für eine Entropie (S) vom Mikroprozessor (22) zu empfangen, als Reaktion auf die Anforderung eine zweite extrahierte Zufallsbitsequenz aus dem Zufallsbitpool zu extrahieren und den Zufallszahlengenerator (102) anzuweisen, eine echte Zufallszahl (TRN) zu erzeugen; und
die Krypto-Engine (200) konfiguriert ist, die echte Zufallszahl (TRN) mit der zweiten extrahierten Zufallsbitsequenz zu maskieren, um eine Entropie (S) zu erzeugen, und die Entropie (S) an den Mikroprozessor (22) zu übertragen.

10. Speichervorrichtung (20) nach einem der Ansprüche 1 bis 8, worin der Mikroprozessor (12, 22) ferner eine Krypto-Engine (120, 200) umfasst und worin:
die Steuerung (100) ferner einen Zufallszahlengenerator (102) umfasst und ferner konfiguriert ist, einen Sicherheitsbefehl (Cs) zu empfangen, der eine Anforderung einer Entropie (S) vom Mikroprozessor (22) enthält, und den Zufallszahlengenerator (102) anzuweisen, als Reaktion auf die Anforderung eine echte Zufallszahl (TRN) zu erzeugen; und
die Krypto-Engine (200) konfiguriert ist, mehrere Bits in der echten Zufallszahl (TRN) in einem vorbestimmten Zeitraum zu kombinieren, um eine Entropie (S) zu erzeugen, und die Entropie (S) an den Mikroprozessor (22) zu übertragen.

11. Speichervorrichtung (20) nach einem der Ansprüche 1 bis 8, worin der Mikroprozessor (12, 22) ferner eine Krypto-Engine (120, 200) umfasst und worin:
die Steuerung (100) ferner konfiguriert ist, einen Sicherheitsbefehl (Cs) zu empfangen, der eine Anforderung für eine Entropie (S) vom Mikroprozessor (22) enthält, und als Reaktion auf die Anforderung eine zweite extrahierte Zufallsbitsequenz aus dem Zufallsbitpool zu extrahieren; und
die Krypto-Engine (200) konfiguriert ist, mehrere Bits in der zweiten extrahierten Zufallsbitsequenz in einem vorbestimmten Zeitraum zu kombinieren, um eine Entropie (S) zu erzeugen, und die Entropie (S) an den Mikroprozessor (22) zu übertragen.

## Revendications

1. Dispositif de mémoire (10, 20, 30) comprenant:
une matrice mémoire (106);
un contrôleur (100) couplé à un microprocesseur (12, 22);
une unité à fonction physiquement inclonable (PUF) (105);
dans lequel l'unité à fonction physiquement inclonable (PUF) (105) est configurée pour fournir un pool de bits aléatoires;
le contrôleur (100) est couplé à l'unité PUF (105) et est configuré pour, à la réception d'une commande de sécurité provenant du microprocesseur pour accorder l'accès aux données de la matrice mémoire, extraire une séquence de bits aléatoires du pool de bits aléatoires, et comprend:
un moteur de masquage (101) configuré pour exécuter une fonction de dérivation de clé afin d'étirer la séquence de bits aléatoires extraite, dans une opération de masquage de données, exécuter une opération XOR sur la séquence de bits aléatoires étirée et l'adresse d'accès (Addr) de manière bit à bit afin de masquer l'adresse d'accès (Addr) avec la séquence de bits aléatoires étirée pour générer une clé dérivée, stocker la clé dérivée dans une mémoire locale, et masquer la séquence de données (Data) avec la clé dérivée afin de générer une séquence de données masquée (Datam); et
dans lequel la matrice mémoire (106) est couplée au moteur de masquage (101) et est configurée pour stocker la séquence de données masquée (Datam) à l'adresse d'accès,
dans lequel le moteur de masquage (101) est en outre configuré pour, dans une opération de lecture, lire la séquence de données masquée à partir de la matrice mémoire (106) à l'adresse d'accès, masquer la séquence de données masquée avec la clé dérivée à partir de la mémoire locale afin de récupérer la séquence de données, et transmettre la séquence de données au microprocesseur.

2. Dispositif de mémoire (10, 20, 30) selon la revendication 1, **caractérisé en ce que** le contrôleur (100) comprend en outre une unité d'identifiant unique (UID) (103) configurée pour générer un identifiant unique en fonction de la séquence de bits aléatoires extraite.

3. Dispositif de mémoire (10, 20, 30) selon l'une quelconque des revendications précédentes, **caractérisé en ce que** le contrôleur (100) comprend en outre:
un générateur de nombres aléatoires (102) couplé à l'unité PUF (105) et configuré pour générer un nombre aléatoire véritable avec la séquence de bits aléatoires extraite.

4. Dispositif de mémoire (20, 30) selon la revendication 3, **caractérisé en ce qu'**il comprend en outre:
un moteur cryptographique (200) couplé au contrôleur (100) et configuré pour générer une entropie (S) en utilisant la séquence de bits aléatoires extraite et/ou le nombre aléatoire véritable.

5. Dispositif de mémoire (30) selon la revendication 4, **caractérisé en ce qu'**il comprend en outre:
un processeur cryptographique (300) couplé au moteur cryptographique (200) et configuré pour générer des clés (K) en utilisant l'entropie (S) et la séquence de bits aléatoires extraite.

6. Dispositif de mémoire (10, 20, 30) selon l'une quelconque des revendications précédentes, **caractérisé en ce que** l'unité PUF (105), la matrice mémoire (106) et le contrôleur (100) sont formés dans un circuit intégré.

7. Dispositif de mémoire (10, 20, 30) selon l'une quelconque des revendications précédentes, **caractérisé en ce que** l'unité PUF (105) comprend une mémoire programmable une seule fois.

8. Dispositif de mémoire (10, 20, 30) de l'une quelconque des revendications précédentes, **caractérisé en ce que** le contrôleur (100) est en outre configuré pour contrôler l'accès aux données de la matrice mémoire (106) en fonction de la commande de sécurité (Cs).

9. Dispositif de mémoire (20) selon l'une quelconque des revendications précédentes, dans lequel le microprocesseur (12, 22) comprend en outre un moteur cryptographique (120, 200) et dans lequel:
le contrôleur (100) comprend en outre un générateur de nombres aléatoires (102) et est en outre configuré pour recevoir une commande de sécurité (Cs) comprenant une demande d'entropie (S) provenant du microprocesseur (22), extraire une deuxième séquence de bits aléatoires extraite du pool de bits aléatoires en réponse à la demande, et demander au générateur de nombres aléatoires (102) de générer un nombre aléatoire véritable (TRN); et
le moteur cryptographique (200) est configuré pour masquer le nombre aléatoire véritable (TRN) avec la deuxième séquence de bits aléatoires extraite afin de générer une entropie (S), et transmettre l'entropie (S) au microprocesseur (22).

10. Dispositif de mémoire (20) selon l'une quelconque des revendications 1 à 8, dans lequel le microprocesseur (12, 22) comprend en outre un moteur cryptographique (120, 200) et dans lequel:
le contrôleur (100) comprend en outre un générateur de nombres aléatoires (102) et est en outre configuré pour recevoir une commande de sécurité (Cs) comprenant une demande d'entropie (S) provenant du microprocesseur (22) et pour ordonner au générateur de nombres aléatoires (102) de générer un nombre aléatoire véritable (TRN) en réponse à la demande; et
le moteur cryptographique (200) est configuré pour combiner une pluralité de bits dans le nombre aléatoire véritable (TRN) pendant une période prédéterminée afin de générer une entropie (S), et transmettre l'entropie (S) au microprocesseur (22).

11. Dispositif de mémoire (20) de l'une quelconque des revendications 1 à 8, dans lequel le microprocesseur (12, 22) comprend en outre un moteur cryptographique (120, 200) et dans lequel:
le contrôleur (100) est en outre configuré pour recevoir une commande de sécurité (Cs) comprenant une demande d'entropie (S) provenant du microprocesseur (22), et extraire une deuxième séquence de bits aléatoires extraite du pool de bits aléatoires en réponse à la demande; et
le moteur cryptographique (200) est configuré pour combiner une pluralité de bits dans la deuxième séquence de bits aléatoires extraite dans une période prédéterminée afin de générer une entropie (S), et transmettre l'entropie (S) au microprocesseur (22).
